# EUROPÄISCHE PATENTSCHRIFT

(11) **EP 2 721 983 B1**
(45) Veröffentlichungstag und Bekanntmachung des Hinweises auf die Patenterteilung: **27.07.2016**
(21) Anmeldenummer: 13004933.1
(22) Anmeldetag: 15.10.2013
(51) Int. Cl.: A47K 3/28

(54) **Halteeinrichtung zur Montage an Duschstangen**
Holding device for mounting on shower rods
Dispositif de support destiné à être monté sur des barres de douche

(30) Priorität: 22.10.2012 DE 102012020600
(43) Veröffentlichungstag der Anmeldung: 23.04.2014
(73) Patentinhaber: Grohe AG, 58675 Hemer (DE)
(72) Erfinder: Lobermeier, Hans, 58708 Menden (DE); Fromme, Marc, 44267 Dortmund (DE)

(56) Entgegenhaltungen:
- DE-U1- 20 003 623
- US-A- 1 272 936
- US-A- 3 194 526
- US-A- 5 604 633
- US-A1- 2012 159 748

## Beschreibung

Die vorliegende Erfindung betrifft eine Halteeinrichtung zur Montage an Duschstangen. Derartige Halteeinrichtungen kommen in Duschen und Bädern zur Anwendung. Bei einer bekannten und besonders häufig verwendeten Art von Halteeinrichtungen, wird das Halteelement durch eine Klemmkraft an der Duschstange befestigt wird. Die Halteeinrichtung weist dazu zwei zueinander bewegliche Abschnitte auf, welche in der Regel durch eine Schraubbewegung aufeinander zu bewegt und mit der Duschstange verspannt werden.

Die bekannten Halteeinrichtungen sind allerdings häufig aus einer Vielzahl von Bauteilen zusammengesetzt und von daher kompliziert und teuer in der Herstellung.

Das Dokument US 3 194 526 offenbart eine Halteeinrichtung mit Duschstange nach dem Oberbegriff des Anspruchs 1. Aufgabe der vorliegenden Erfindung ist es, die sich aus dem Stand der Technik ergebenden Probleme zu lösen und insbesondere eine kostengünstige und preiswerte Halteeinrichtung bereit zu stellen.

Diese Aufgaben werden mit einer Vorrichtung gemäß den Merkmalen des Patentanspruchs 1 gelöst. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausführungsbeispiele der Erfindung dargestellt sind.

Vorliegend wird die Aufgabe durch eine Halteeinrichtung zur Montage an Duschstangen mit Duschstange gelöst, wobei die Halteeinrichtung einen wenigstens einseitig offenen Aufnahmeabschnitt zur Aufnahme eines im wesentlichen vertikalen Abschnitts der Duschstange aufweist, wobei der Aufnahmeabschnitt eine Engstelle mit zumindest einem Vorsprung aufweist und einen Mindestabstand an der Engstelle kleiner als eine laterale Länge der Duschstange ist, dadurch gekennzeichnet, dass mindestens eine in vertikaler Richtung wirkende Abstützeinrichtung vorgesehen ist, die eine Aufnahme eines im Wesentlichen horizontalen Abschnitts der Duschstange aufweist. Die laterale Länge der Duschstange entspricht dabei der in Montagerichtung gesehen größte Breite der Duschstange. Bei in der Regel vertikal montierten Duschstangen entspricht dies der Breite der Projektionsfläche der Duschstange in der horizontalen Montagerichtung. Folglich ist bei den üblicherweise kreisrunden Duschstangen die laterale Länge identisch mit dem Außendurchmesser der Duschstange. Weist nun die Halteeinrichtung eine Engstelle auf, so kann diese durch Montage in horizontaler Richtung auf die Duschstange aufgesteckt werden, bis diese die Engstelle passiert hat und am Aufnahmeabschnitt anliegt. Die Halteeinrichtung verbleibt dann, bedingt durch die an der Engstelle bestehende Überschneidung, eigenständig an der Duschstange. Der vorzugsweise U-förmig ausgebildete Aufnahmeabschnitt kann dazu mit jeder Art von Vorsprüngen ausgebildet werden, die dazu geeignet sind eine Engstelle zu bilden mit der die Duschstange umfasst wird.

Bei der Erfindung ist vorgesehen, dass diese mit einer im Wesentlichen horizontalen Ablagefläche verbunden ist. Eine derartige Ablagefläche kann beispielsweise zu Ablage von Seife oder Kosmetikbehältern genutzt werden und ist vorzugsweise mit einem Rand und wenigstens einer Ablauföffnung für Flüssigkeiten versehen.

Weiterhin ist es vorteilhaft, wenn der Aufnahmeabschnitt zumindest teilweise mit einer Oberfläche versehen ist, die einen hohen Reibungskoeffizienten in Bezug auf eine Oberfläche der Duschstange aufweist. Vorzugsweise sollten zumindest die Abschnitte der Oberfläche des Aufnahmeabschnitts einen erhöhten Reibungskoeffizienten aufweisen, die mit der Oberfläche der Duschstange in Berührung gelangen. Hierdurch ist es möglich, ein unbeabsichtigtes vertikales Verschieben der Halteeinrichtung wirkungsvoll zu vermeiden. Bei entsprechender Auslegung ist es darüber hinaus sogar möglich, die Halteeinrichtung in beliebigen Höhen entlang der Duschstange zu platzieren, sofern die Anpresskraft zwischen den in Kontakt stehenden Oberflächen groß genug ist, das Gewicht der beladenen Halteeinrichtung zu tragen. Die Anpresskraft kann durch entsprechende konstruktive Auslegung des wenigstens einen Vorsprungs und der Verformungsfähigkeit des Aufnahmeabschnitts eingestellt werden.

Bei der Erfindung ist vorgesehen, dass zusätzlich mindestens eine in vertikaler Richtung wirkende Abstützeinrichtung vorgesehen ist. Mittels dieser zusätzlichen Abstützeinrichtung ist sichergestellt, dass die Halteeinrichtung an der Duschstange sowohl in horizontaler als auch in vertikaler Richtung fixiert ist. Dies ist möglich, da alle bekannten Duschstangen in der Regel obere und untere Befestigungspunkte zur Wand haben. Die vertikale Abstützung der Halteeinrichtung kann somit bevorzugt an diesen Befestigungspunkten und insbesondere an den unteren Befestigungspunkten erfolgen.

Bei einer sehr einfachen und kostengünstigen Ausführungsform kann eine einfache Abstützung vorgesehen sein, wobei die Halteeinrichtung einfach auf einem der Befestigungspunkte aufliegt.

Die Erfindung sieht vor, dass die Abstützeinrichtung eine Aufnahme zur Aufnahme eines im Wesentlichen horizontalen Abschnitts der Duschstange aufweist. Die Aufnahme kann mit oder ohne eine Engstelle ausgebildet werden. Mit Hilfe dieser Aufnahme wird der horizontale Abschnitt der Duschstange im Bereich der Befestigungspunkte umfasst und fixiert die Halteeinrichtung in vertikaler Richtung. Die Engstelle kann genauso wie der horizontal wirkende Aufnahmeabschnitt mit zumindest einem Vorsprung ausgebildet sein, welcher im montierten Zustand den horizontalen Abschnitt der Duschstange umgreift.

Besonders bevorzugt ist vorgesehen, dass wenigstens eine selbst zurückstellende Gelenkeinrichtung oder ein elastischer Verformungsbereich an der Halteeinrichtung vorgesehen ist, so dass der Mindestabstand der Engstelle temporär und reversibel vergrößerbar ist. Dies gilt sowohl für die Engstelle des Aufnahmeabschnitts als auch für die Engstelle der Aufnahme an der vertikal wirkenden Abstützeinrichtung. Der Mindestabstand der jeweiligen Engstelle kann entweder durch elastische Verformung des gewählten Materials oder durch die Verwendung eines Gelenks in Verbindung mit einem Rückstellelement realisiert werden. Bei der Wahl eines Gelenks kann das Rückstellelement beispielsweise ein Federelement sein, das zur Erhöhung des Mindestabstands gespannt wird und nach dem Passieren der Engstelle durch die Duschstange eine Rückstellkraft ausübt, so dass sich der ursprüngliche Mindestabstand an der Engstelle wieder einstellt. Es ist dabei klar, dass durch die entsprechende Wahl von Materialstärken und Werkstoffen, wie beispielsweise der Dimensionierung und Auswahl verschiedener Kunststoffe unterschiedlich hohe Rückstellkräfte realisieren lassen. Gleiches gilt bei der Wahl von Gelenken mit Rückstellelementen wie beispielsweise Federn, bei denen die Rückstellkraft durch die entsprechende Auswahl von Federform, Anzahl und Federcharakteristika erreicht werden kann. Entscheidend für die Erfindung ist, dass die wenigstens zwei an einer Engstelle sich gegenüberstehenden Oberflächen vorübergehend so weit voneinander weg bewegt werden können, dass der Mindestabstand temporär vergrößert ist und die Duschstange den Bereich der Engstelle passieren kann.

Schließlich ist vorteilhafter Weise noch ein Fixiermittel im Bereich der Engstelle vorgesehen, dass wahlweise einsetzbar ist und eine Vergrößerung des Mindestabstands verhindert. Das Fixiermittel kann beispielsweise eine Klammer oder ein Keil sein, der zur Montage entnommen wird. Die Halteeinrichtung kann dann auf die Duschstange aufgesteckt und wahlweise in horizontaler und/oder in horizontaler und vertikaler Richtung fixiert werden. Nach der Montage wird das Fixiermittel eingesetzt und verhindert, dass sich der Mindestabstand der Engstelle vergrößern kann. Hierbei handelt es sich um eine mechanische Fixierung, die im Bereich des offenen Aufnahmeabschnitts ausschließlich in horizontaler Richtung wirkende Kräfte aufnimmt, so dass sich die gegenüber liegenden Oberflächen der Engstelle nicht voneinander weg bewegen können.

Nachfolgend werden die Erfindung sowie das technische Umfeld anhand der Figuren näher erläutert. Es ist darauf hinzuweisen, dass die Figuren besonders bevorzugte Ausführungsbeispiele der Erfindung zeigen, auf die sie jedoch nicht beschränkt ist. In der Zeichnung zeigt:
Figur 1 eine Schrägansicht einer erfindungsgemäßen Halteeinrichtung;
Figur 2 drei Duschstangenprofile der Erfindung mit lateralen Längen;
Figur 3 eine Draufsicht auf eine weitere erfindungsgemäße Halteeinrichtung; und
Figur 4 eine Seitenansicht der Halteeinrichtung nach Figur 1.

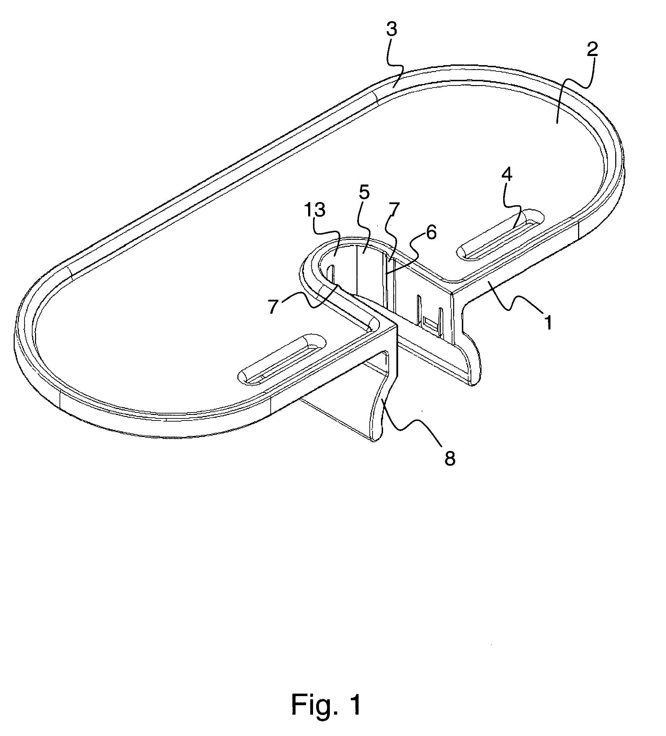

In Figur 1 ist eine erfindungsgemäße Halteeinrichtung 1 in einer perspektivischen Ansicht dargestellt. Die Halteeinrichtung 1 ist mit einer horizontalen Ablagefläche 2 verbunden, die einen Rand 3 und Wasserabläufe 4 aufweist. In der Mitte befindet sich ein U-förmiger Aufnahmeabschnitt 5, der an einer Seite offen ist. Innerhalb des Aufnahmeabschnitts 5 sind an einer Engstelle 6 zwei Vorsprünge 7 vorgesehen. Die Vorsprünge 7 sind als Rippen mit kreissegmentartigem Querschnitt ausgebildet. An der Unterseite der Halteeinrichtung 1 ist weiterhin eine Abstützeinrichtung 8 angeformt, die dazu ausgebildet ist, sich auf einen im Wesentlichen kreisrunden horizontalen Abschnitt einer nicht dargestellten Duschstange 9 abzustützen. Die Montage der Halteeinrichtung 1 an der Duschstange 9 erfolgt in besonders einfacher Weise. Zunächst wird die Halteeinrichtung 1 in horizontaler Richtung auf die Duschstange 9 aufgeschoben, so dass diese die Engstelle 6 passiert und sich im Aufnahmeabschnitt 5 befindet und von den Vorsprüngen 7 gehalten wird. Im nächsten Montageschritt wird die Halteeinrichtung dann in vertikaler Richtung nach unten bewegt, so dass die Abstützeinrichtung 8 an einem horizontalen Abschnitt der Duschstange aufliegt. Bevorzugterweise ist dies der untere Befestigungspunkt der Duschstange. Nach der Montage ist die Halteeinrichtung 1 dann sowohl in vertikaler als auch in horizontaler Richtung fixiert.

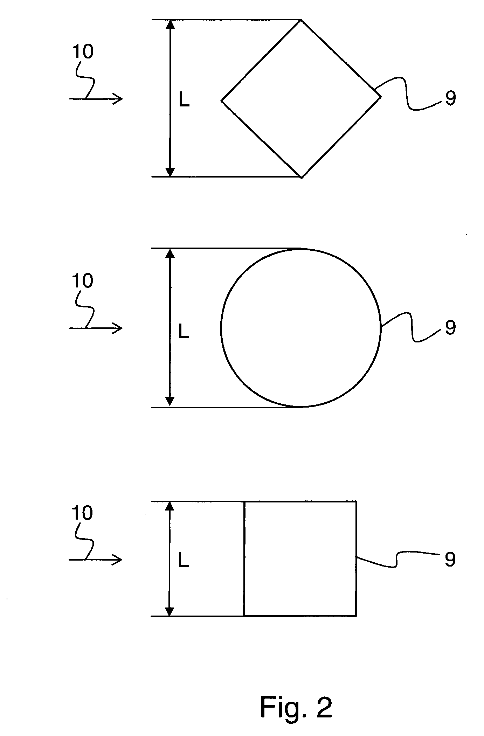

In Figur 2 sind drei verschiedene Profile von Duschstangen 9 der Erfindung in einer Schnittansicht dargestellt. Es handelt sich hierbei um ein quadratisches und ein kreisrundes Profil. Bei der Ermittlung der lateralen Länge (L) ist eine Montagerichtung 10 zu berücksichtigen. Dies wird besonders deutlich am ersten und dritten Beispiel. Während es sich bei beiden Querschnitten um rechtwinklige quadratische Profile der Duschstange 9 handelt, ergibt sich im oberen Beispiel eine größere laterale Länge (L) als im unteren Beispiel. Dies liegt darin begründet, dass die in Montagerichtung projizierte Länge (L) im obersten Fall größer ist als im untersten. Diese projizierte Länge ist aber ausschlaggebend für die Montage und hierbei insbesondere bei der Überwindung der Engstelle 6.

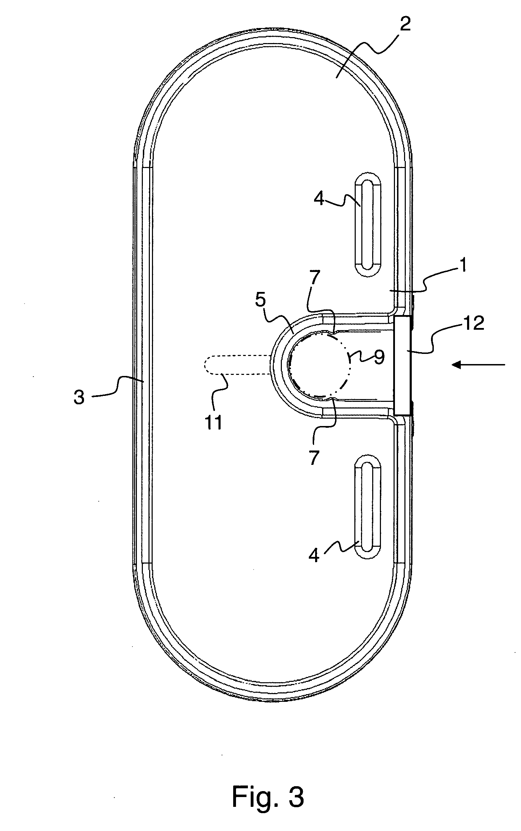

In Figur 3 ist nun eine weitere bevorzugte Ausführungsform einer erfindungsgemäßen Halteeinrichtung 1 dargestellt. Bei dieser Draufsicht ist gut erkennbar, wie die Duschstange 9 von den Vorsprüngen 7 innerhalb des U-förmigen Aufnahmeabschnitts 5 gehalten wird. Bei dieser Ausführungsform sind noch weitere Merkmale gezeigt, die Weiterbildungen darstellen. Eines dieser Merkmale besteht darin, einen Ausschnitt 11 im Werkstoff der Halteeinrichtung 1 als elastischen Verformungsbereich vorzusehen, welcher bewirkt, dass die Beweglichkeit der Vorsprünge 7 zueinander erhöht wird. Zusätzlich ist beabstandet zur Duschstange 9 im montierten Zustand ein Fixiermittel 12 vorgesehen, welches verhindert, dass sich die Vorsprünge 7 im montierten Zustand voneinander wegbewegen. Das Fixiermittel 12 kann beispielsweise eine eingesteckte Klammer sein, die ausschließlich Zugkräfte in horizontaler Richtung aufnimmt aber dennoch beabstandet zur Duschstange 9 angeordnet ist. Das Fixiermittel kann zur Montage bzw. Demontage einfach gesteckt oder verklipst sein.

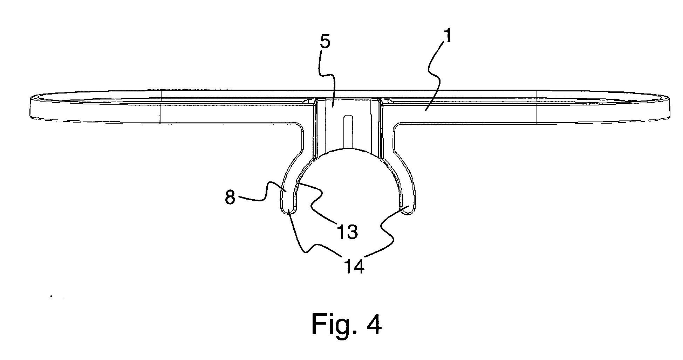

Schließlich ist in Figur 4 nochmals eine Seitenansicht der Halteeinrichtung nach Figur 1 dargestellt, wobei gut erkennbar ist, dass die Abstützeinrichtung 8 komplementär geformt zur Aufnahme eines kreisrunden horizontalen Abschnitts der Duschstange 9 ausgebildet ist. Die Duschstange 9 ist bei dieser Figur jedoch nicht dargestellt ist. Während es bei der Ausführungsform nach Figur 4 vorgesehen ist, dass sich die Halteeinrichtung 1 lediglich in vertikaler Richtung an der Duschstange 9 abstützt, können die Enden 14 der Abstützeinrichtung auch nach unten verlängert und an der Innenseite mit zusätzlichen nicht dargestellten Vorsprüngen 7 ausgestattet werden, so dass auch der horizontale Abschnitt der Duschstange 9 bei der Montage eine Engstelle 6 passieren muss. Im montierten Zustand umschließt dann auch diese Engstelle 6 die Duschstange 9, so dass gemeinsam mit der weiteren Engstelle 6 eine Fixierung der Halteeinrichtung sowohl in vertikaler als auch in horizontaler Richtung erreicht ist. Weiterhin ist es möglich, eine Oberfläche 13 an der Innenseite der Abstützeinrichtung 8 mit einem erhöhten Reibwert gegenüber der Duschstange 9 auszubilden, so dass die Halteeigenschaften nochmals verbessert sind. Hierzu kommen insbesondere Elastomere Werkstoffe in Betracht. Diese Ausgestaltung der Oberfläche 13 kann im Übrigen auch im Bereich des Aufnahmeabschnitts 5 realisiert werden. Dies ist in allen Bereichen sinnvoll, an denen eine Oberfläche 13 mit der Duschstange 9 zur Anlage gelangt.

### Bezugszeichenliste:

- 1: Halteeinrichtung
- 2: horizontale Ablagefläche
- 3: Rand
- 4: Wasserabläufe
- 5: Aufnahmeabschnitt
- 6: Engstelle
- 7: Vorsprung
- 8: Abstützeinrichtung
- 9: Duschstange
- 10: Montagerichtung
- 11: Ausnehmung
- 12: Fixiermittel 13 Oberfläche
- 14: Ende

## Patentansprüche

1. Halteeinrichtung (1) zur Montage an Duschstangen (9) mit Duschstange (9), wobei die Halteeinrichtung einen wenigstens einseitig offenen Aufnahmeabschnitt (5) zur Aufnahme eines im Wesentlichen vertikalen Abschnitts der Duschstange (9) aufweist, wobei der Aufnahmeabschnitt (5) eine Engstelle (6) mit zumindest einem Vorsprung (7) aufweist und ein Mindestabstand an der Engstelle (6) kleiner als eine laterale Länge (L) der Duschstange (9) ist
**dadurch gekennzeichnet, dass**
mindestens eine in vertikaler Richtung wirkende Abstützeinrichtung (8) vorgesehen ist, die eine Aufnahme zur Aufnahme eines im Wesentlichen horizontalen Abschnitts der Duschstange (9) aufweist.

2. Halteeinrichtung (1) nach dem vorhergehenden Anspruch, **dadurch gekennzeichnet, dass** diese mit einer im Wesentlichen horizontalen Ablagefläche (2) verbunden ist.

3. Halteeinrichtung (1) nach einem der vorhergehenden Ansprüche, **dadurch gekennzeichnet, dass** der Aufnahmeabschnitt (5) zumindest teilweise mit einer Oberfläche (13) versehen ist, die einen hohen Reibungskoeffizienten in Bezug auf eine Oberfläche der Duschstange (9) aufweist.

4. Halteeinrichtung (1) nach einem der vorhergehenden Ansprüche, **dadurch gekennzeichnet, dass** die Abstützeinrichtung (8) eine Aufnahme mit einer Engstelle zur Aufnahme eines im Wesentlichen horizontalen Abschnitts der Duschstange (9) aufweist.

5. Halteeinrichtung (1) nach einem der vorhergehenden Ansprüche, **dadurch gekennzeichnet, dass** wenigstens eine selbstrückstellende Gelenkeinrichtung oder ein elastischer Verformungsbereich (11) vorgesehen ist, so dass der Mindestabstand der Engstelle (6) temporär vergrößerbar ist.

6. Halteeinrichtung (1) nach einem der vorhergehenden Ansprüche, **dadurch gekennzeichnet, dass** im Bereich der Engstelle (6) wahlweise einsetzbare Fixiermittel (12) vorgesehen sind, die eine Vergrößerung des Mindestabstands verhindern.

## Claims

1. Holding device (1) for mounting on shower rails (9), with a shower rail (9), the holding device having a receiving portion (5), which is open on at least one side, for receiving a substantially vertical portion of the shower rail (9), wherein the receiving portion (5) has a constriction (6) with at least one projection (7), and a minimum gap at the constriction (6) is smaller than a lateral length (L) of the shower rail (9),
**characterised in that**
at least one support device (8) acting in the vertical direction is provided, which support device has a receiving means for receiving a substantially horizontal portion of the shower rail (9).

2. Holding device (1) according to the preceding claim, **characterised in that** the holding device is joined to a substantially horizontal storage surface (2).

3. Holding device (1) according to either one of the preceding claims, **characterised in that** the receiving portion (5) is, at least in part, provided with a surface (13) having a high coefficient of friction with respect to a surface of the shower rail (9).

4. Holding device (1) according to any one of the preceding claims, **characterised in that** the support device (8) has a receiving means with a constriction for receiving a substantially horizontal portion of the shower rail (9).

5. Holding device (1) according to any one of the preceding claims, **characterised in that** at least one self-resetting joint device or a resilient deformation region (11) is provided, so that the minimum gap of the constriction (6) can be temporarily enlarged.

6. Holding device (1) according to any one of the preceding claims, **characterised in that** in the region of the constriction (6) there are provided fixing means (12) which are insertable as desired and prevent enlargement of the minimum gap.

## Revendications

1. Dispositif de support (1) destiné à être monté sur des barres de douche (9) comprenant une barre de douche (9),
ce dispositif de support comprenant un segment de réception (5) ouvert sur au moins un côté destiné à recevoir un segment essentiellement vertical de la barre de douche (9),
le segment de réception (5) comprenant un rétrécissement étroit (6) ayant au moins une saillie (7) et la largeur au niveau du rétrécissement minimum (6) étant inférieure à la longueur latérale (L) de la barre de douche (9),
**caractérisé en ce qu'**
il est prévu au moins un dispositif d'appui (8) agissant en direction verticale qui comporte un logement de réception pour permettre de recevoir un segment essentiellement horizontal de la barre de douche (9).

2. Dispositif de support (1) conforme à la revendication précédente,
**caractérisé en ce qu'**
il est lié à une surface de pose (2) essentiellement horizontale.

3. Dispositif de support (1) conforme à l'une des revendications précédentes,
**caractérisé en ce que**
le segment de réception (5) est équipé au moins en partie d'une surface (13) qui a un coefficient de friction élevé par rapport à la surface de la barre de douche (9).

4. Dispositif de support (1) conforme à l'une des revendications précédentes,
**caractérisé en ce que**
le dispositif d'appui (8) comprend un logement de réception ayant un rétrécissement pour permettre la réception d'un segment essentiellement horizontal de la barre de douche (9).

5. Dispositif de support (1) conforme à l'une des revendications précédentes,
**caractérisé en ce qu'**
il est prévu au moins un dispositif d'articulation à mémoire de forme ou une zone de déformation élastique (11) de sorte que la largeur minimum du rétrécissement (6) puisse être augmentée temporairement.

6. Dispositif de support (1) conforme à l'une des revendications précédentes,
**caractérisé en ce qu'**
il est prévu dans la zone du rétrécissement (6) des moyens de fixation (12) pouvant être utilisés sélectivement qui empêchent une augmentation de la largeur minimum.
